# EUROPÄISCHE PATENTSCHRIFT

(11) **EP 0 442 098 B1**
(45) Veröffentlichungstag und Bekanntmachung des Hinweises auf die Patenterteilung: **05.06.1996**
(21) Anmeldenummer: 90124498.8
(22) Anmeldetag: 18.12.1990
(51) Int. Cl.: C08L 83/04

(54) **Verfahren zur Herstellung feinteiliger Organopolysiloxanemulsionen**
Process for the preparation of small particle organopolysiloxane emulsions
Procédé de préparation d'emulsions d'organopolysiloxanes à particules fines

(30) Priorität: 16.02.1990 DE 4004946
(43) Veröffentlichungstag der Anmeldung: 21.08.1991
(73) Patentinhaber: WACKER-CHEMIE GMBH, D-81737 München (DE)
(72) Erfinder: Huhn, Karl, Dr., W-8263 Burghausen (DE); Seidl, Christine, W-8263 Burghausen (DE); Ullrich, Kurt, W-8263 Burghausen (DE)

(56) Entgegenhaltungen:
- EP-A- 138 192
- EP-A- 0 156 970
- AU-B- 7 902 981
- DE-A- 3 031 157
- DE-A- 3 139 974
- DE-A- 3 723 697
- DE-A- 3 842 471
- DE-B- 1 240 278
- GB-A- 1 191 289
- US-A- 4 399 247
- US-A- 4 814 376

## Beschreibung

Die vorliegende Erfindung betrifft ein Verfahren zur Herstellung von sehr feinteiligen, Organopolysiloxane enthaltenden Emulsionen und die so herstellbaren Emulsionen.

### Stand der Technik

Feinteilige Organopolysiloxanemulsionen sind u.a. aus US-A-4 620 878 (ausgegeben am 4. 11. 1986, R.P. Gee, Dow Corning Corp.) bekannt. Die demgemäß hergestellten Emulsionen müssen mindestens einen Emulgator enthalten, der im Organopolysiloxan unlöslich ist. Aus Organopolysiloxan, Emulgator und Wasser wird in einem ersten Schritt ein Ölkonzentrat gebildet, welches in einem zweiten Schritt sehr schnell und ohne zeitliche Verzögerung in Wasser dispergiert werden muß, damit eine genügend feinteilige Emulsion erhalten wird. In WO 88/08 436 (offengelegt am 3. 11. 1988, H. Chrobaczek et al., Chemische Fabrik Pfersee GmbH) werden feinteilige Emulsionen beschrieben. Diese werden aus aminoalkylsubstituiertem Polyorganosiloxan, wasserlöslichem Emulgator, Säure und Wasser unter Erhitzung auf mindestens 50 °C hergestellt.

In DE-A-38 42 471 ist die Herstellung eines Konzentrats aus polare Gruppen, bzw. Silanolgruppen aufweisendem Polyorganosiloxan, mindestens einem im Polyorganosiloxan unlöslichen Emulgator, einem aliphatischen einwertigen Alkohol mit 5 bis 18 Kohlenstoffatomen und Wasser beschrieben. Das Konzentrat wird durch rasche Dispergierung in Wasser zu einer Emulsion mit einer mittleren Teilchengröße von weniger als 0,3 µm verarbeitet.

In EP-A-156 970 ist die Herstellung eines Konzentrats aus in den endständigen Einheiten je eine Hydroxylgruppe aufweisenden Dimethylpolysiloxans, Nonylphenolpolyglykolether und Wasser und die Herstellung einer Emulsion durch Zugabe von Wasser zu dem Konzentrat beschrieben.

In US-A-4,814,376 ist die Herstellung eines Konzentrats aus mit Epoxygruppen modifiziertem Methylpolysiloxan, Nonylphenolpolyglykolether und Wasser und die Herstellung einer Emulsion mit einer mittleren Teilchengröße von 0,23 µm durch Zugabe von Wasser zu dem Konzentrat beschrieben.

EP-A-138 192, Vergleichsbeispiel 2 beschreibt, daß aus einem aminofunktionellen Siliconöl, einem darin löslichen nichtionischen Emulgator und Wasser keine feine Emulsion oder Mikroemulsion erhalten wird.

### Aufgabe

Es war Aufgabe der vorliegenden Erfindung, ein möglichst wenig aufwendiges Verfahren zur Herstellung feinteiliger Emulsionen bereitzustellen. Ferner war es Aufgabe der vorliegenden Erfindung, ein Verfahren zur Herstellung solcher Emulsionen bereitzustellen, wobei das als Zwischenprodukt erhältliche Konzentrat nicht sofort schnell in Wasser dispergiert werden muß. Des weiteren war es Aufgabe der vorliegenden Erfindung, ein Verfahren zur Herstellung der genannten Emulsionen zur Verfügung zu stellen, wobei die Reaktionsmischung nicht während der ganzen Dauer der Herstellung auf relativ hoher Temperatur gehalten werden muß.

### Beschreibung

Die vorstehend beschriebenen Aufgaben werden durch die vorliegende Erfindung gelöst durch ein Verfahren zur Herstellung von Polyorganosiloxane enthaltenden Emulsionen mit einer mittleren Teilchengröße von weniger als 0,3 µm, wobei in einem ersten Schritt
A) aus Polyorganosiloxan, Wasser und im Polyorganosiloxan löslichem nichtionischem Emulgator ein Konzentrat hergestellt wird
   und in einem zweiten Schritt
B) das so erhaltene Konzentrat mit Wasser auf den gewünschten Gehalt an Polyorganosiloxan verdünnt wird, mit der Maßgabe, daß die Polyorganosiloxane zumindest ein ammoniumfunktionelles Polyorganosiloxan enthalten und daß ein Emulgator als im Polyorganosiloxan löslich gilt, wenn ein Gewichtsteil Emulgator mit hundert Gewichtsteilen Polyorganosiloxan bei 20°C vermischt wird und das so erhältliche Gemisch klar ist.

Vorzugsweise wird im oben beschriebenen Verfahren mindestens einer der Schritte A) oder B), vorzugsweise beide Schritte A) und B) bei Temperaturen unter 50 °C, vorzugsweise unter 40 °C durchgeführt.

Vorzugsweise bestehen mindestens 50 Gewichtsprozent, insbesondere mindestens 75 Gewichtsprozent des Polyorganosiloxans aus amino- und/oder ammoniumfunktionellen Polyorganosiloxanen.

Vorzugsweise besitzen die nach dem erfindungsgemäßen Verfahren hergestellten Emulsionen eine mittlere Teilchengröße von weniger als 0,14 µm. Insbesondere sind die genannten Emulsionen transparent, speziell klar.

Vorzugsweise werden im erfindungsgemäßen Verfahren Polyorganosiloxane der Formel (I) eingesetzt, wobei mindestens ein Polyorganosiloxan ammoniumfunktionell ist:

RₙR'ₘSiO_{(4-n-m)/2} (I),

worin
- **R**: gleiche oder verschiedene, gegebenenfalls substituierte Kohlenwasserstoffreste oder Kohlenwasserstoffoxyreste mit jeweils 1 bis 18 Kohlenstoffatomen,
- **R'**: gleiche oder verschiedene, Si-C-gebundene, polare Gruppen enthaltende substituierte Kohlenwasserstoffreste oder Hydroxylgruppen,
- **n**: eine ganze Zahl im Wert von 0, 1, 2 oder 3,.
- **m**: eine ganze Zahl im Wert von 0, 1, 2 oder 3
bedeuten, und die Summe n+m einen durchschnittlichen Wert von 1,8 bis 2,2 besitzt und m so gewählt ist, daß das Polyorganosiloxan mindestens einen Rest **R'** aufweist.

Obwohl in der oben aufgeführten Formel nicht aufgeführt, kann ein Teil der Reste **R** durch direkt an Siliciumatome gebundene Wasserstoffatome ersetzt sein. Dies ist jedoch nicht bevorzugt.

Vorzugsweise besitzt die Summe **n + m** einen durchschnittlichen Wert von 1,9 bis 2,1.

Vorzugsweise ist R' ein Aminoalkyl- oder ein Ammoniumalkylrest.

Beispiele für Kohlenwasserstoffreste **R** sind Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest;

Beispiele für substituierte Kohlenwasserstoffreste **R** sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropyl-rest, der Heptafluorisopropylrest, und Halogenarylreste, wie der o-, m-, und p-Chlorphenylrest.

Beispiele für gegebenfalls substituierte Kohlenwasserstoffoxyreste **R** sind über ein direkt an ein Siliciumatom gebundenes Sauerstoffatom gebundene substituierte und unsubstituierte Kohlenwasserstoffreste **R** gemäß den vorstehend genannten Beispielen, insbesondere Alkoxyreste mit 1 bis 18 Kohlenstoffatomen und Phenoxyreste, speziell der Methoxy-, Ethoxy-, n-Propoxy-, iso-Propoxy- und Phenoxyrest. Vorzugsweise sind höchstens 5 % der Reste **R** gegebenfalls substituierte Kohlenwasserstoffoxyreste.

Beispiele für Reste **R'** sind aminofunktionelle Kohlenwasserstoffreste, beispielsweise Aminoalkylreste, wie der γ-Aminopropylrest und der β-Aminoethyl-γ-aminopropylrest; Aminoarylreste; Si-C-gebundene cyclische aminofunktionelle Reste; Ammoniumalkylreste, wie die aus den vorstehend genannten aminofunktionellen Kohlenwasserstoffresten durch Umsetzung mit Carbon- oder Mineralsäuren oder Alkylierungsmitteln darstellbaren Reste; Hydroxylgruppen, über eine Alkylen- oder Arylengruppe an das Siliciumatom gebundene Carbonsäure- oder Sulfonsäureresten oder deren Ester; Mercaptoalkylreste; Si-C-gebundene Kohlenwasserstoffreste, welche Epoxy-, Hydroxy-, Amido- und/oder Carboxygruppen aufweisen.

Beispiele für bevorzugte Reste **R'** sind aminofunktionelle Kohlenwasserstoffreste, beispielsweise Aminoalkylreste, wie der Aminomethyl-, 1- oder 2-Aminoethyl-, 1-, 2- oder 3-Aminopropyl-, 4-Aminobutyl-, N,N-Dimethylaminomethyl-, N-[2-Aminoethyl]-3-aminopropylrest; Aminoarylreste, wie o-, m- und p-Aminophenylreste, o-, m-, und p-[N,N-Dimethylamino]-phenylreste; direkt oder über eine Alkylengruppe an das Siliciumatom gebundene Morpholin- und Piperidinreste; ammoniumfunktionelle Kohlenwasserstoffreste, die durch Umsetzung der vorstehend genannten aminofunktionellen Kohlenwasserstoffreste mit Mineralsäuren, wie Salz-, Perchlor-, Schwefel-, schweflige, Salpeter-, salpetrige, Fluß-, Phosphor-, Diphosphor- und Polyphosphorsäuren; mit Carbonsäuren, wie Ameisen, Essig-, Propion-, Butansäuren, Citronensäure, Trichlor-, Dichlor- und Chloressigsäure, Trifluoressigsäure, Cyanessigsäure, Phenylessigsäue, Benzoesäure, m- und p-Nitrobenzoesäure, Oxalsäure, Malonsäure, Milchsäure und dergleichen mehr.
Beispiele für amidofunktionelle Reste sind der γ-Acetamidopropylrest, teil- oder vollacetylierte β-Aminoethyl-γ-aminopropylreste.

Als Reste **R'** sind besonders bevorzugt der 3-Aminopropylrest, der N-[2-Aminoethyl]-3-aminopropylrest und die durch Umsetzung mit den oben genannten Mineral- und/oder Carbonsäuren, insbesonder mit Essigsäure, daraus herstellbaren ammoniumfunktionellen Reste.

Vorzugsweise sind die Reste **R** Methyl-, Ethyl-, Phenyl- Methoxy- und/oder Vinylreste. Wegen der leichteren Zugänglichkeit sind vorzugsweise 50 % der Reste **R**, insbesondere mindestens 80 % der Reste **R** Methylreste.

Es kann ein Polyorganosiloxan, vorzugsweise ein solches der Formel (I), eingesetzt werden, es können auch mehrere Polyorganosiloxane eingesetzt werden. Werden mehrere Polyorganosiloxane eingesetzt, so ist es bevorzugt, daß mindestens ein Polyorganosiloxan der Formel (I) eingesetzt wird. Es kann speziell mindestens ein Polyorganosiloxan der Formel (I) in Gemisch mit Polydimethylsiloxanen mit endständigen Alkyl- und/oder Alkoxygruppen mit jeweils 1 bis 4 Kohlenstoffatomen oder ausschließlich Polyorganosiloxane der Formel (I) eingesetzt werden. Es ist jedoch besonders bevorzugt, daß ausschließlich Polyorganosiloxane der Formel (I) eingesetzt werden.

In jeden Fall enthalten die Polyorganosiloxane zumindest ein ammonium funktionelles Polyorganosiloxan.

Das im erfindungsgemäßen Verfahren eingesetzte Polyorganosiloxan(gemisch) ist vorzugsweise flüssig. Insbesondere besitzen die im erfindungsgemäßen Verfahren eingesetzten Polyorganosiloxane jeweils Viskositäten von 100 mPa*s bis 1.000.000 mPa*s, jeweils gemessen bei 25 °C.

Zur erfindungsgemäßen Herstellung der Emulsionen werden nichtionische Emulgatoren benötigt, welche im Polyorganosiloxan löslich sind. Das bedeutet, daß der jeweils eingesetzte Emulgator bzw. das jeweils eingesetzte Emulgatorengemisch im Polyorganosiloxan löslich sein müssen. Wird ein Emulgatorengemisch eingesetzt, so ist jeder darin enthaltene Emulgator in dem Polyorganosiloxan löslich. Die Löslichkeit eines Emulgators oder eines Emulgatorgemisches überprüft man vorzugsweise, indem man ein Gewichtsteil Emulgator bzw. Emulgatorgemisch mit hundert Gewichtsteilen Polyorganosiloxan bei 20 °C vermischt. Ist das so erhältliche Gemisch klar, so gilt der Emulgator bzw. das Emulgatorgemisch als im Polyorganosiloxan löslich.

Nichtionische Emulgatoren sind grundsätzlich bekannt. Zu diesen zählen insbesondere:
1. Alkylpolyglycolether, vorzugsweise solche mit 2 bis 40 EO-Einheiten und Alkylresten von 8 bis 20 C-Atomen.
2. Alkylarylpolyglycolether, vorzugsweise solche mit 2 bis 40 EO-Einheiten und 8 bis 20 C-Atomen in den Alkyl- und Arylresten.
3. Ethylenoxid/Propylenoxid(EO/PO)-Blockcopolymere, vorzugsweise solche mit 8 bis 40 EO- bzw. PO-Einheiten.
4. Fettsäurepolyglycolester, vorzugsweise solche mit 6 bis 24 C-Atomen und 2 - 40 EO-Einheiten.
5. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.
6. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Alle diese nichtionischen Emulgatoren können im erfindungsgemäßen Verfahren eingesetzt werden, sofern sie im Polyorganosiloxan löslich sind.

Bevorzugt als nichtionische Emulgatoren, sofern sie im Polyorganosiloxan löslich sind, sind die oben unter 1. und 2. aufgeführten nichtionischen Emulgatoren, ganz besonders die unter 1. aufgeführten Alkylpolyglycolether, speziell Alkylpolyglycolether mit 2 bis 10 EO-Einheiten und Alkylresten von 8 bis 20 C-Atomen.

Die nach dem erfindungsgemäßen Verfahren herstellbaren Emulsionen enthalten vorzugsweise von 5 bis 50 Gewichtsprozent, insbesondere von 10 bis 25 Gewichtsprozent an Polyorganosiloxan, jeweils bezogen auf die Summe der Gewichte von Polyorganosiloxan, Emulgator und Wasser. Die nach dem erfindungsgemäßen Verfahren herstellbaren Emulsionen enthalten Emulgator vorzugsweise in Mengen von 10 bis 70 Gewichtsprozent, insbesondere von 20 bis 40 Gewichtsprozent, jeweils bezogen auf das Gewicht von eingesetztem Polyorganosiloxan.

Außer Polyorganosiloxan, Emulgator und Wasser können die Emulsionen noch Zusatzstoffe enthalten. Die sind insbesondere Bactericide, Fungicide, Algicide, Mikrobicide, Duftstoffe, Korrosioninhibitoren, Farbstoffe, Pigmente, Verdickungsmittel, Füllstoffe und, wenn auch nicht bevorzugt, organische Lösungsmittel. Die erfindungsgemäß herstellbaren Emulsionen enthalten Zusatzstoffe vorzugsweise in Mengen von 0 bis 1 Gewichtsprozent, insbesondere von 0,01 bis 0,1 Gewichtsprozent, jeweils bezogen auf die Summe der Gewichte von Polyorganosiloxan, Emulgator und Wasser.

Im Schritt A des erfindungsgemäßen Verfahrens wird aus Polyorganosiloxan, im Polyorganosiloxan löslichem Emulgator und Wasser ein Konzentrat hergestellt. Grundsätzlich können diese Komponenten in beliebiger Reihenfolge zugegeben werden. Es ist jedoch bevorzugt, daß zuerst eine Mischung von Emulgator und Wasser hergestellt wird und zu dieser Mischung Polyorganosiloxan zugegeben wird.

Die Zugabe des restlichen Wassers in Schritt B des erfindungsgemäßen Verfahrens erfolgt vorzugsweise durch schrittweises Einarbeiten in das Konzentrat.

Weder in Schritt A noch in Schritt B ist ein Erwärmen des Gemisches notwendig. Vorzugsweise beträgt die Temperatur in mindestens einem der Schritte A bzw. B, speziell in beiden Schritten von 5 °C bis 45 °C, insbesondere von 10 °C bis 40 °C.

Der im Schritt A auf die jeweiligen Komponenten bzw. Mischungen ausgeübte Druck ist vorzugsweise der gegebenenfalls durch Mischorgane erhöhte äußere Druck von 0,01 bis 1 MPa (abs.), insbesondere 0,09 bis 0,11 MPa (abs.).

Das im erfindungsgemäßen Verfahren eingesetzte ammoniumfunktionelle Polyorganosiloxan kann hergestellt werden durch Zugabe von Mineralsäuren oder Carbonsäuren zu entsprechenden aminofunktionellen Polyorganosiloxanen. Diese Zugabe von Säure zum Polyorganosiloxan kann erfolgen, bevor das Polyorganosiloxan in Schritt A des erfindungsgemäßen Verfahrens eingesetzt wird, was bevorzugt ist. Die Umsetzung des aminofunktionellen Polyorganosiloxanen kann aber auch während Schritt A erfolgen, indem eine entsprechende Menge Säure und aminofunktionelles Polyorganosiloxan in Schritt A eingesetzt werden. In beiden Fällen kann es ratsam sein (bevorzugte Ausführungsform), wenn die Säuremenge so bemessen wird, daß nicht alle Aminogruppen des aminofunktionellen Polyorganosiloxans zu Ammoniumgruppen umgesetzt werden.

Wird ein aminofunktionelles Polyorganosiloxan zurHerstellung des im erfindungsgemäßen Verfahren eingesetzten ammoniumfunktionellen Siloxan verwendet, so ist bevorzugt, daß es eine Aminzahl von 0,1 bis 3,0, insbesondere von 0,2 bis 0,9 besitzt. Die Aminzahl eines aminofunktionellen Stoffes wird bestimmt als Verbrauch in cm³ an n Salzsäure bei der Titration von 1 g des aminofunktionellen Stoffes.

Wird ein aminofunktionelles Polyorganosiloxan verwendet, so wird die Emulsion vorzugsweise nach Schritt B durch entsprechende Zugabe von Säure auf einen pH-Wert von 3 bis 7, insbesondere von 4 bis 6 eingestellt.

Der Schritt B auf das Konzentrat während seiner Verdünnung mit Wasser ausgeübte Druck ist vorzugsweise der gegebenenfalls durch Mischorgane erhöhte äußere Druck von 0,01 bis 1 MPa (abs.),insbesondere 0,09 bis 0,11 MPa (abs.).

Das erfindungsgemäße Verfahren kann grundsätzlich in jedem turbulenten Mischer durchgeführt werden, der auch bisher zur Herstellung von Emulsionen verwendet wurde. Wie aus den obenstehenden Ausführungen zu entnehmen ist, braucht dieser Mischer nicht beheizbar sein.

Beispiele für in Schritt A und Schritt B verwendbare Mischer sind Rührer, wie Blatt-, Balken-, Anker-, Gitter-, Schnekken-, Propeller-, Scheiben-, Impeller-, Turbinen-, Planetenrührer, Ein- und Doppelschneckenmischer, Mischturbinen, Kolloidmühlen, Ultraschallmischer, In-line-Mischer, Pumpen, Homogenisatoren, wie Hochdruck-, Turbinen- und Umlaufhomogenisatoren.

Das erfindungsgemäße Verfahren kann absatzweise, kontinuierlich oder halbkontinuierlich durchgeführt werden. Vorzugsweise wird das Verfahren kontinuierlich durchgeführt.

Die Emulsionen können überall eingesetzt werden, wo auch bisher Siliconemulsionen eingesetzt worden sind. Besonders sind sie geeignet zur Imprägnierung von Fasern und Geweben, in Kosmetika, Reinigungs- und Poliermitteln, in Anstrichen oder Imprägniermitteln für Baustoffe und deren Vorprodukte, in Antischaummitteln und für klebrige Stoffe abweisende Beschichtungen. So können sie verwendet werden zum Schlichten von Glas-, Keramik- und Kohlefasern, zum Imprägnieren und Beschichten von Textilfasern - beispielsweise als Fadengleitmittel - und Textilgeweben, in Kosmetika, wie Handcremes, Body-Lotions, Shampoos, Haarspülungen, Haarfestigern, Rasiercremes und -lotionen, in Polituren, wie Möbel-, Fußboden- und Autopolituren, in Wachsen, wie Fußboden-wachsen und in Desinfektionsmitteln, zur Hydrophobierung von Gips vor oder nach dessen Formgebung zu Bauteilen, zum Imprägnieren von Natur- oder Kunststein, Beton, Zement, Mauerwerk, zum Hydrophobieren von Gasbeton vor oder nach dessen Aufschäumen, in Anstrichen für Bauwerke und deren Teile, wie Dispersionsfarben, insbesondere in Siliconfarben, in oder als Papierbeschichtungen für Träger von selbstklebenden Etiketten und als Formtrennmittel für Polymere.

Besonders bevorzugt ist die Verwendung der Emulsionen als Mittel oder in Mitteln zur Imprägnierung und Beschichtung von Textilfasern und -geweben.

In den nachfolgenden Beispielen sind, falls jeweils nicht anders angegeben,
a) alle Mengenangaben auf das Gewicht bezogen;
b)alle Drücke 0,10 MPa (abs.);
c)alle Temperaturen 20° C .

### Beispiele

### Aminofunktionelle Polyorganosiloxane:

- Polymer **A**:: Polydiorganosiloxan bestehend aus Dimethylsiloxy-, Methyl(β-Aminoethyl-γ-aminopropyl)siloxyeinheiten und endständigen Trimethylsilylgruppen; Viscosität: 1000 mPa*s bei 25 °C; Aminzahl: 0,6 .
- Polymer **B:**: Polydiorganosiloxan bestehend aus Dimethylsiloxy-, Methyl(β-Aminoethyl-γ-aminopropyl)-siloxyeinheiten und endständigen Methoxydimethylsilylgruppen; Viscosität: 1000 mPa*s bei 25 °C; Aminzahl: 0,3 .

### Emulgator C:

Isotridecylalkoholpolyglykolether mit 6 Ethylenoxyeinheiten, käuflich unter dem Warenzeichen Genapol^{R} XO60 bei der Hoechst AG, D-6000 Frankfurt/Main 80.

### Beispiel 1:

a) Ein ammoniumfunktionelles Polyorganosiloxan wurde hergestellt durch Vermischen von 170 Gewichtsteilen Polymer **A** mit 3 Gewichtsteilen 99,8Gew.%iger Essigsäure. In dem so hergestellten Polmer ist der Emulgator **C** löslich.
b) Aus 173 Gewichtsteilen des gemäß a) hergestellten Polymers, 60 Gewichtsteilen Emulgator **C** und 50 Gewichtsprozent Wasser wurde durch Emulgieren ein Konzentrat hergestellt.
c) Das gemäß b) hergestellte Konzentrat wurde schrittweise mit 717 Gewichtsteilen Wasser verdünnt. Erhalten wurde eine wasserklare Emulsion mit einem mittleren Teilchendurchmesser von 4 nm.

Während des in diesem Beispiel 1 geschilderten Verfahrens wurde höchstens eine Temperatur von 33 °C erreicht.

### Beispiel 2:

a) Ein ammoniumfunktionelles Polyorganosiloxan wurde hergestellt durch Vermischen von 170 Gewichtsteilen Polymer **B** mit 3 Gewichtsteilen 99,8 Gew.%iger Essigsäure. In dem so hergestellten Polymer ist der Emulgator **C** löslich.
b) Aus 173 Gewichtsteilen des gemäß a) hergestellten Polymers, 60 Gewichtsteilen Emulgator **C** und 50 Gewichtsprozent Wasser wurde durch Emulgieren ein Konzentrat hergestellt.
c) Das gemäß b) hergestellte Konzentrat wurde schrittweise mit 717 Gewichtsteilen Wasser verdünnt. Erhalten wurde eine wasserklare Emulsion mit einem mittleren Teilchendurchmesser von 16 nm.

Während des in diesem Beispiel 2 geschilderten Verfahrens wurde höchstens eine Temperatur von 33 °C erreicht.

### Beispiel 3:

In eine Mischung von 60 Gewichtsteilen Emulgator **C** und 60 Gewichtsteilen Wasser wurden 170 Gewichtsteile Polymer **A**, 70 Gewichtsteile Wasser und 3 Gewichtsteile 99,8 Gew.%iger Essigsäure eingearbeitet. (Emulgator **C** ist löslich in dem aus 170 Gewichtsteilen Polymer **A** und 3 Gewichtsteilen 99,8 Gew.%iger Essigsäure hergetellten ammoniumfunktionellen Polyorganosiloxan.).

Die so erhaltene kleisterartige Mischung wurde sehr langsam und gründlich und , sobald die Mischung dünnflüssig wurde, zügig, mit insgesamt 637 Gewichtsteilen Wasser verdünnt und schließlich mit 0,5 Gewichtsteilen eines baktericid, algicid und korrosionsinhibierend wirkenden Zusatzstoffes versetzt. Aschließend wurde der pH-Wert der so erhaltenen Emulsion mit verdünnter Essigsäure auf einen Wert von 5,5 eingestellt.

Erhalten wurde eine wasserklare Emulsion mit einem mittleren Teilchendurchmesser von 25 nm.

Während des in diesem Beispiel 3 geschilderten Verfahrens wurde höchstens eine Temperatur von 30° C erreicht.

### Beispiele 4 - 6:

Die Beispiele 1, 2 und 3 wurden in einer kontinuierlich arbeitenden Anlage wiederholt, wobei in einem ersten Mischer das Konzentrat hergestellt wurde, welches in einem zweiten Mischer mit der entsprechenden Menge Wasser verdünnt und gegebenfalls Zusatzstoff zugegeben wurde. Es wurden jeweils wasserklare Emulsionen mit einem mittleren Teilchendurchmesser von unter 100 nm erhalten. In diesen Beispielen wurden jeweils Temperaturen von höchstens 30° C erreicht.

## Patentansprüche

1. Verfahren zur Herstellung von Polyorganosiloxane enthaltenden Emulsionen mit einer mittleren Teilchengröße von weniger als 0,3 µm, wobei in einem ersten Schritt
A) aus Polyorganosiloxan, Wasser und im Polyorqanosiloxan löslichem nichtionischem Emulgator ein Konzentrat hergestellt wird
und in einem zweiten Schritt
B) das so erhaltene Konzentrat mit Wasser auf den gewünschten Gehalt an Polyorganosiloxan verdünnt wird, mit der Maßgabe, daß die Polyorganosiloxane zumindest ein ammoniumfunktionelles Polyorganosiloxan enthalten und daß ein Emulgator als im Polyorganosiloxan löslich gilt, wenn ein Gewichtsteil Emulgator mit hundert Gewichtsteilen Polyorganosiloxan bei 20°C vermischt wird und das so erhältliche Gemisch klar ist.

2. Verfahren nach Anspruch 1, wobei mindestens einer der Schritte A) oder B), vorzugsweise beide Schritte A) und B) bei Temperaturen unter 50 °C, vorzugsweise unter 40 °C durchgeführt wird.

3. Verfahren nach Anspruch 1 oder 2, wobei in Schritt A zuerst ein Gemisch aus Emulgator und Wasser hergestellt wird, zu dem anschließend das Polyorganosiloxan gegeben wird.

## Claims

1. Process for the preparation of polyorganosiloxane-containing emulsions having a mean particle size of less than 0.3 µm, in which, in a first step,
A) a polyorganosiloxane, water and nonionic emulsifier which is soluble in the polyorganosiloxane are used to. prepare a concentrate
and, in a second step,
B) the concentrate obtained in this way is diluted with water to the desired content of polyorganosiloxane with the proviso that the polyorganosiloxanes contain at least one ammonium-functional polyorganosiloxane and that an emulsifier is regarded as being soluble in the polyorganosiloxane when one part by weight of emulsifier is mixed with a hundred parts by weight of polyorganosiloxane at 20°C and the mixture obtainable in this way is clear.

2. Process according to Claim 1, in which at least one of steps A) or B), preferably both steps A) and B), is carried out at temperatures below 50°C, preferably below 40°C.

3. Process according to Claim 1 or 2, in which, in step A, a mixture is first prepared from the emulsifier and water, and the polyorganosiloxane is subsequently added thereto.

## Revendications

1. Procédé de préparation d'émulsions contenant des polyorganosiloxanes avec une taille moyenne des particules inférieure à 0,3 µm, où dans une première étape
A) on prépare un concentré à partir du polyorganosiloxane, d'eau et d'un émulsionnant non ionique soluble dans le polyorganosiloxane,
et dans une deuxième étape
B) le concentré ainsi obtenu est dilué au moyen d'eau jusqu'à la teneur souhaitée en polyorganosiloxane, avec la condition que les polyorganosiloxanes contiennent au moins un polyorganosiloxane ammoniumfonctionnel et que l'émulsionnant est considéré comme soluble dans les polyorganosiloxanes lorsqu'une partie en poids d'émulsionnant est mélangée avec cent parties en poids des polyorganosiloxanes à 20°C et que le mélange ainsi obtenu est limpide.

2. Procédé suivant la revendication 1, où au moins l'une des étapes A) ou B), de préférence les deux étapes A) et B), est réalisée à une température inférieure à 50°C, de préférence inférieure à 40°C.

3. Procédé suivant la revendication 1 ou 2, où dans l'étape A), on prépare d'abord un mélange constitué de l'émulsionnant et d'eau, auquel on ajoute ensuite le polyorganosiloxane.
